Europäisches Patentamt

European Patent Office

Office européen des brevets

(19)

(11) EP 0 902 159 A2

(12) EUROPEAN PATENT APPLICATION

(43) Date of publication:
17.03.1999 Bulletin 1999/11

(51) Int Cl.$^6$: E21B 10/56

(21) Application number: 98307038.4

(22) Date of filing: 02.09.1998

(84) Designated Contracting States:
AT BE CH CY DE DK ES FI FR GB GR IE IT LI LU MC NL PT SE
Designated Extension States:
AL LT LV MK RO SI

(30) Priority: 02.09.1997 US 922038
02.09.1997 US 921778

(71) Applicant: TEMPO TECHNOLOGY CORPORATION
Somerset, NJ 08873 (US)

(72) Inventors:
• Yorston, John B.
  Mendham, New Jersey (US)
• Setlur, Deepthi R.
  Cliffwood, New Jersey 07721 (US)

(74) Representative: Lunt, Mark George Francis
Dibb Lupton Alsop
Fountain Precinct
Balm Green
Sheffield S1 1RZ (GB)

(54) Cutting element with a non-planar, non-linear interface

(57) A cutting element has a substrate with a non-planar, non-linear surface bonded to a superhard element. The substrate provides one or more non-linear grooves radially mounted in spaced relationships on the surface of the substrate. Each groove has a generally curved shape that unfurls from a first circle on the substrate towards a perimeter of the substrate. The groove shape is defined by complex functions, examples of which include high order polynomials and involutes. The depth and width of the groove varies, generally in an increasing manner, along the path from the first circle towards the substrate perimeter. Further, the pitch of the groove also varies along the path from the first circle towards the substrate perimeter.

Fig 1B

## Description

Background

The present invention relates to cutting elements with non-planar interfaces and, more specifically, to cutting elements with non-planar, non-linear interfaces.

Industrial applications such as subterranean drilling, cutting, machining, milling, grinding, and other abrasive operations require tools with high abrasion resistance and impact resistance. In these instances, abrasive compacts designed specifically to provide needed abrasion and impact resistance are deployed. Each abrasive compact typically has an abrasive layer of sintered polycrystalline diamond, wherein the polycrystalline diamond layer is created by subjecting a mass of individual crystals to high pressure and temperature processes or to chemical vapor deposition processes or physical vapor deposition such that intra-crystalline bonding occurs. These abrasive compacts are thus called polycrystalline diamond (PCD) compacts.

Each PCD compact is a coherent, polycrystalline hard composite having a substrate, or mounting layer, and a table made of a superhard abrasive layer. The substrate or mounting layer is typically a metal carbide substrate, while the superhard abrasive layer is made from synthetic or natural diamond, cubic boron nitrite (CBN), wurzite boron nitrite, or combinations thereof. The abrasive layer and the substrate are bonded together using a process known as sintering, or sintered bonding, as known to those skilled in the art. The resulting PCD compact is subsequently mounted to a bit body for use with drilling equipment.

The sintering of the substrate to the polycrystalline material occurs under a temperature that is in excess of 1,300°C. After cooling down from the bonding temperature, the substrate may shrink faster than the polycrystalline material layer due to differences in coefficients of thermal expansion. The differential shrinkage leads to residual shear stresses between the substrate and the PCD layer. As such, thermally-induced stresses are introduced between the substrate and the polycrystalline material, leading to a reduction in the bond strength. In addition, tensile stresses may be introduced in localized regions in an outer cylindrical surface of the substrate and internally in the substrate.

Further, during use, impact forces may release stress in the form of fractures in the compact. As a result, the abrasive layer may spall and/or delaminate, causing a potential separation and loss of the diamond or other superhard material on a cutting surface. These failure modes are likely to lead to instability and, ultimately, a complete failure of the PCD element.

A number of cutter configurations have been developed to overcome the aforementioned problems. To improve the bond between the superhard material and the substrate, certain cutting elements have modified the shape of the superhard material and substrate interface from a traditional planar configuration to a configuration that provides mechanical interlocks between the superhard material and the substrate. Attempts to increase the performance of the cutting elements have also focused on applying a non-planar interface (NPI) geometry such as a ridge to increase the interfacial area between the superhard material and the substrate. The presence of the ridge improves the bonding between the table and the substrate by accommodating a distortion which results from a heating of the cutting assembly during the formation as well as a subsequent bonding of the cutting element onto a carrier. Such distortion results from a difference in coefficients of thermal expansion and moduli of elasticity between the superhard material of the facing table and the less hard material of the substrate.

Yet other NPI cutting elements employ one or more constant cross-sectional grooves or channels on the abrasive layer that communicate with their counterparts on the substrate. However, the use of parallel grooves at the interface as a mechanical interlock is not ideal, because although parallel ridges or similar perturbations create surfaces that have symmetry in cross-sections, they are not symmetrical about a central axis. This in turn requires a correct orientation of the cutter in the drill bit in order to realize the improved mechanical interlocking feature.

Other NPI cutting elements provide sinusoidal-like grooves that run perpendicular to a longitudinal axis of the cutting element. Yet other NPI cutting elements provide grooves that run radially to or in a circular fashion about the longitudinal axis of the cutting element. Further, certain NPI cutting elements position concentric annular rings that expand outwardly from the center of the interface to increase the bonding surface area. The increase in volume of the superhard material at the bonding location increases the wear life of the compact. The resistance to impacts is also improved by providing greater bonding strength between the superhard material and the abrasive layer.

Additionally, other cutting elements use a curved or a domed interface to increase the bonding strength between the superhard material and the substrate. The domed interface, by virtue of its geometry, also increases the volume of the superhard material available for abrasive tasks. However, even with NPI cutting elements, the spalling and delamination of the cutting element still exist. Such failures in the cutting element may necessitate a retooling of the drill bit in the field. When down-time, labor cost and replacement costs are considered, such failures are undesirable, especially in the case of deep-well and off-shore drilling applications.

## Summary of the Invention

A cutting element has generally planar base having a surface on the base and a first set of non-planar, non-linear grooves concentrically formed on the surface. The substrate with the non-planar, non-linear grooves has an asymmetrical cross section. Each groove has a generally curved shape formed from a non-linear wall. The groove unfurls from a center of the substrate toward a perimeter of the substrate.

In another aspect, blades are formed by grooves cut on the surface of the substrate. The blades are divided into two groups, one group having apexes of grooves that form the blades positioned on a first circle concentric with a center of the element. A second group having apexes of grooves that form the blades positioned on a second circle which is concentric with the first circle.

In another aspect, the grooves follow paths that radiate outward either from a center point, or offset from the center, to meet a circle about the center of the substrate. The profiles of the grooves follow non-linear curves defined by complex functions, examples of which include high-order polynomials and involutes. The paths of the grooves also follow curves defined by a set of complex functions in 3-D space. The depth and width of the groove varies, generally in an increasing manner, along the path from the first circle toward the substrate perimeter. Further, the pitch of the groove also varies along the path from the first circle towards the substrate perimeter.

In another aspect, the region from the center of the substrate surface, up to the perimeter, has a curvature that is yet another complex function. The top of the grooves have fillets that remove all sharp edges from the non-linear surface. The resulting structure is a capped substrate with alternating non-linear grooves flowing downwardly from the top of the substrate.

In yet another aspect, the non-planar interface (NPI)-non-linear interface (NLI) grooves have cross sections that vary in width, depth, and pitch. Moreover, the cross-sections of the NPI-NLI grooves are non-symmetrical.

Advantages of the invention may include one or more of the following. Stress concentrations in the cutting element are reduced by virtue of an absence of discrete cleavage planes and lines, thereby improving the strength of the cutting element in severe impact applications. Additionally, the cutting element geometry reduces crack propagation due to the absence of discrete cleavage planes and lines. Moreover, residual stress concentrations are reduced in comparison with conventional elements having linear radial lines and planes. The stress reduction is achieved by dissipating inherent mismatches in elastic and thermal properties of the diamond table and substrate over the greatest possible area. Moreover, the NLI PCD cutter allows for independent variations in the width and the depth of the groove to better control residual stress properties of the manufactured cutter. Step type transitions in material properties are removed, thereby reducing stress concentrations. Moreover, a diffusion front of materials used during liquid phase sintering becomes more uniform by virtue of the removal of step-type transitions in the interface geometry. The NLI profile of the cutting element distributes residual stresses caused by inherent differences in material properties more evenly and over a larger surface. Hence, the non-linear interfacial surface also reduces shear stress as applied to the interface during use. Additionally, the enhanced mechanical interlocking enhances the stability and the performance of the cutting element, resulting in a high resistance to impacts during the drilling cycle and therefore translates into a longer bit life. Furthermore, the symmetry of the cutting element about its center alleviates the need for a proper orientation of the cutting element during its assembly into a drill bit. Additionally, the increased surface area allows a thick superhard layer such as the PCD layer to be provided toward the perimeter of the element to increase a durability of the cutting element.

## Description of the Drawings

The invention will become apparent from a consideration of the following detailed description presented in connection with the accompanying drawings, in which:

Fig. 1A is a perspective view illustrating a PCD cutting element;
Fig. 1B is an exploded view illustrating the PCD cutting element of Fig. 1A;
Fig. 2 is a perspective view of a substrate of Fig. 1A;
Fig. 3 is a top view of the substrate of Fig. 2;
Fig. 4 is a cross-sectional view of the substrate of Fig. 2, as cut along line A-A of Fig. 2;
Figs. 5A and 5B are profiles of grooves on the substrate;
Fig. 5C illustrates an involute profile for the groove;
Figs. 6A and 6B illustrate paths of the groove;
Fig. 7 illustrates a contour of a top surface of the substrate;
Fig. 8 is a flow chart illustrating a process of generating and optimizing high order polynomial equations describing the shape of a groove;
Fig. 9 is a flow chart illustrating a substrate manufacturing process;

Fig. 10A is a top view of a second substrate; and
Fig. 10B is a cross sectional view of the substrate of Fig. 10A.

<u>Description</u>

DEFINITION:

The following definitions apply to specific terms used in describing cutting elements discussed below:

Non-linear: a characteristic of a structure with a continuous surface and whose cross section does not lie in any one plane.
Non-planar: a characteristic of a structure whose surface does not lie in a single plane.
Involute: A curve formed by a path of a point on a straight line, called the generatrix, as it rolls along a convex base curve which is generally a circle.

THE NON-LINEAR, NON-PLANAR INTERFACE

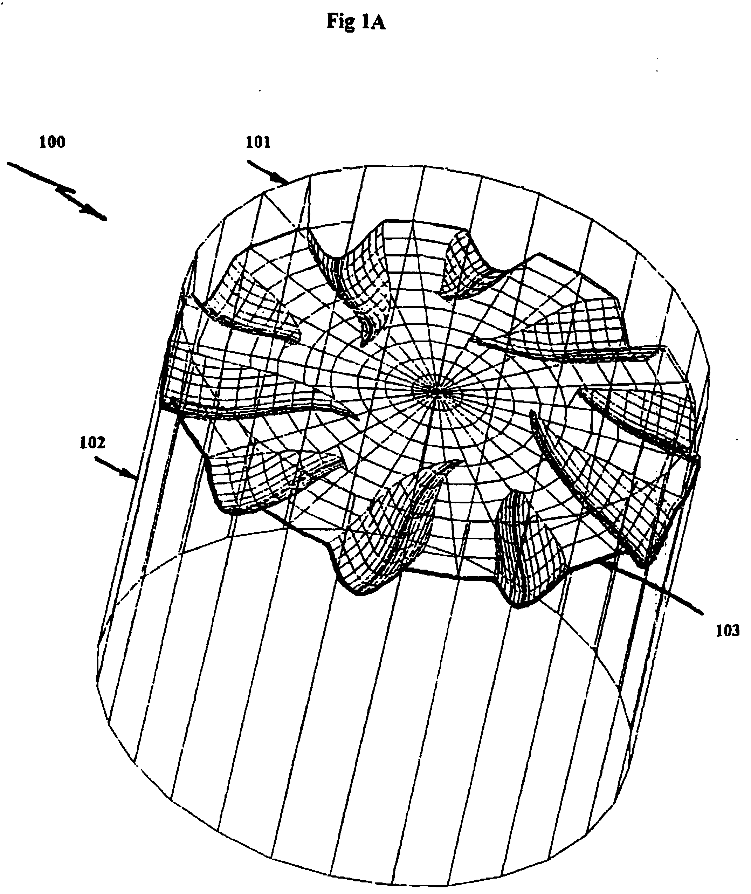

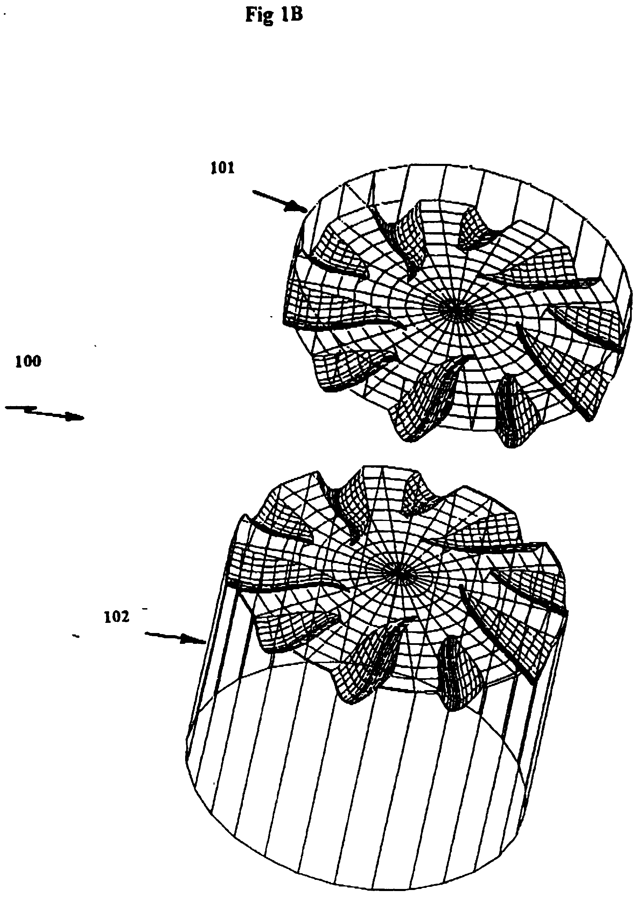

Turning now to the drawings, Figure 1A illustrates a composite cutting element 100. The cylindrical element 100 has a superhard portion 101 and a substrate portion 102. The superhard portion 101 may be a PCD compact, and the substrate portion 102 may be a tungsten carbide substrate. An interface 103 exists between the superhard portion 101 and the substrate portion 102. The interface 103 may be concave, convex, curved or any other complex shape. An exploded view of the compact 100 of Figure 1A is shown in Figure 1B.

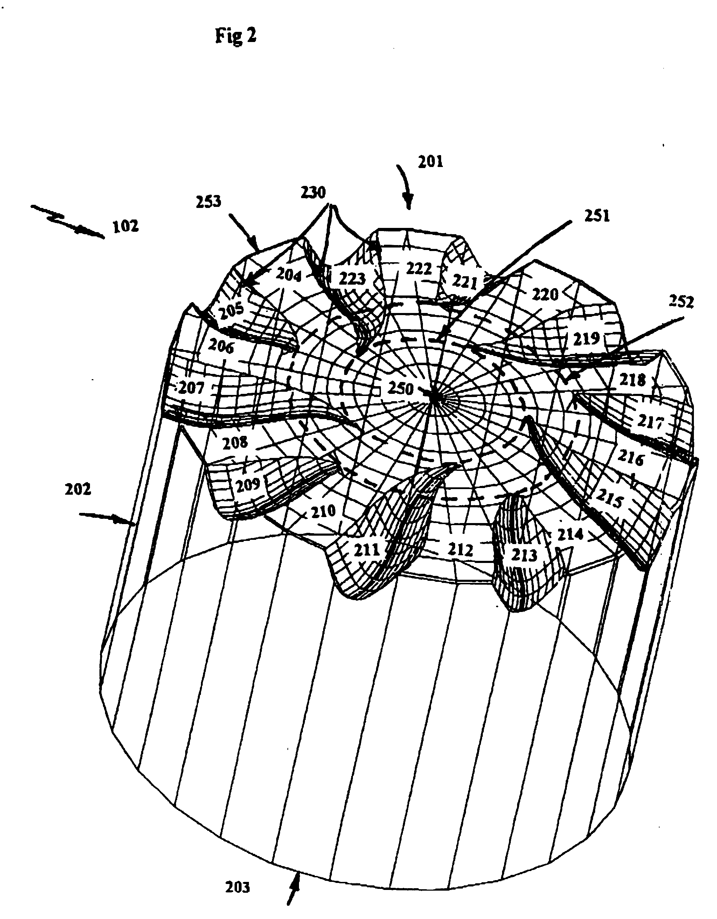

A more detailed illustration of the substrate 102 is shown in Figure 2. The substrate 102 has a top surface 201, a cylindrical surface 202 and a bottom surface 203. Mounted on the top surface 201 are a plurality of NPI-NLI grooves 205, 207, 209, 211, 213, 215, 217, 219, 221 and 225. Positioned between these grooves are blades 204, 206, 208, 210, 212, 214, 216, 218, 220 and 222 respectively. In this embodiment, the NPI-NLI grooves 205, 209, 213, 217, and 221 form a first set of grooves which are symmetrical in relation to each other, while the NPI-NLI grooves 207, 211, 215, 219 and 223 from a second set of grooves that are symmetrical in relation to each other. Moreover, each edge 230 of NPI-NLI grooves 205, 207, 209, 211, 213, 215, 217, 219, 221 and 223 has a fillet (not shown).

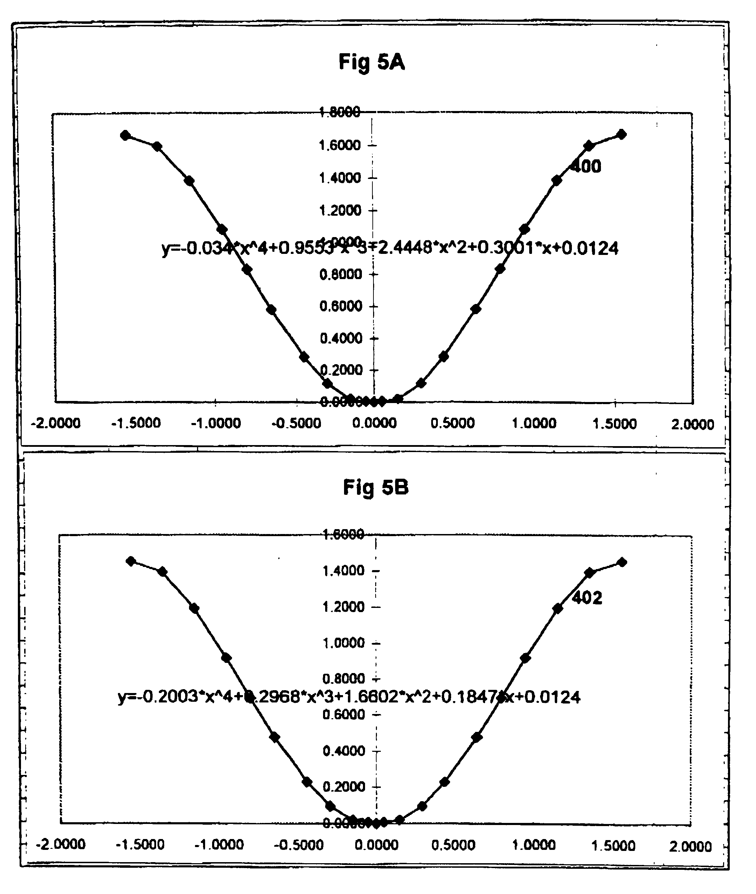

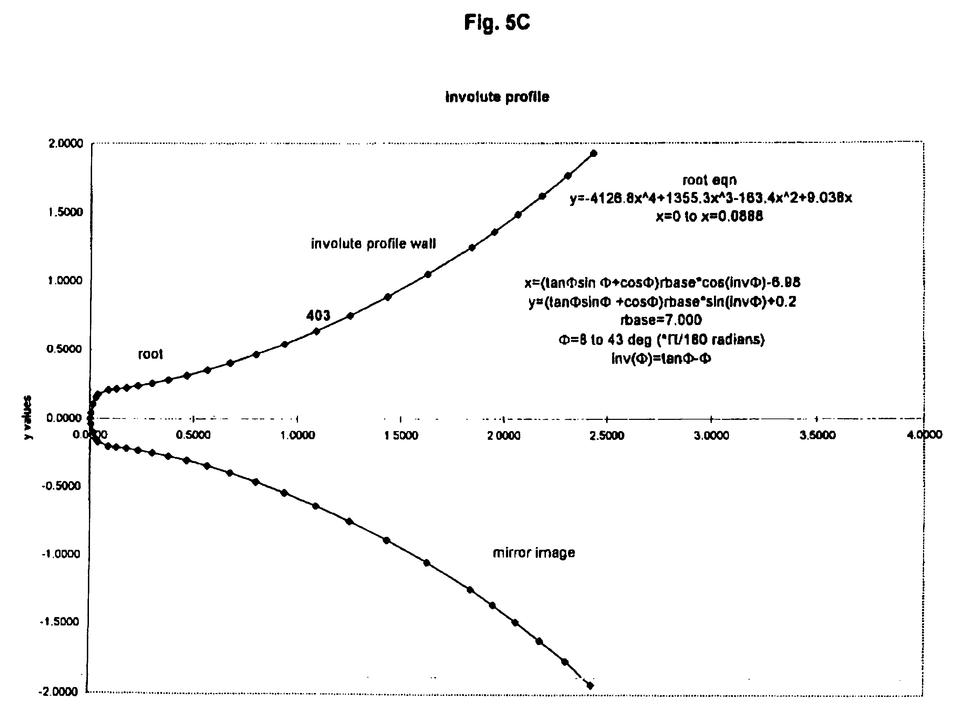

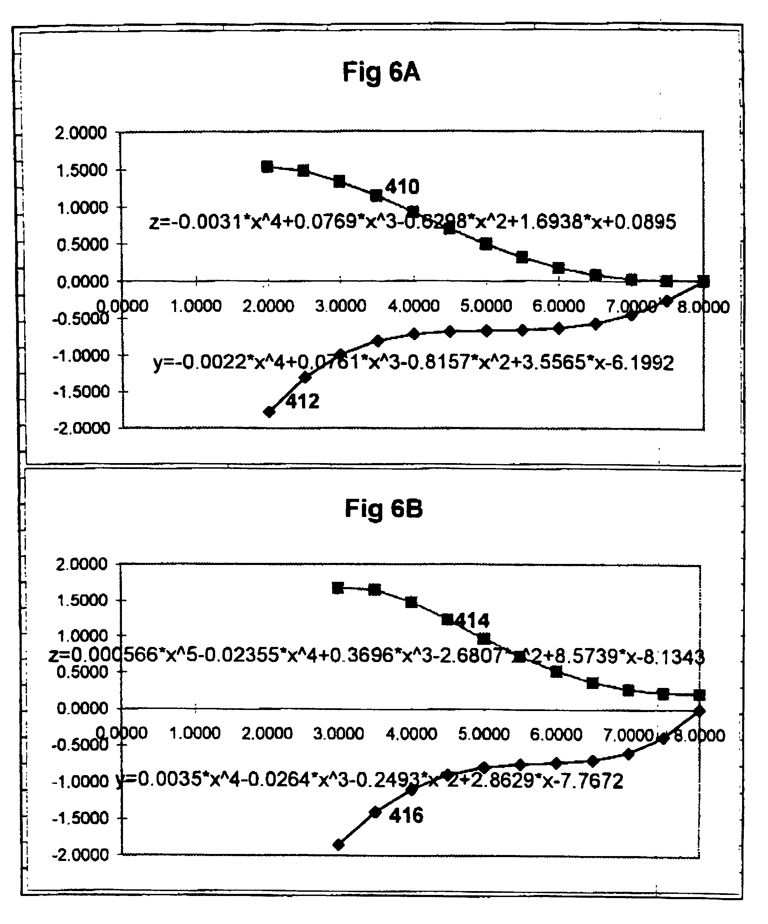

The NPI-NLI grooves 207, 211, 215, 219 and 223 have tips positioned on an imaginary circle 251 on the top surface 201. These grooves expand to a periphery of the substrate 102. Moreover, each of the NPI-NLI grooves 207, 211, 215, 219 and 223 has a cross-section with a 3-D, non-linear path mathematically defined as a high order polynomial or alternatively an involute shape. A representative cross-section profile of each of the NPI-NLI grooves 207, 211, 215, 219 and 223 is shown in more detail in Figure 5A, while a representative non-linear, 3D path of each of the NPI-NLI blades 207, 211, 215, 219 and 223 is shown in more detail in Figure 6A. The involute profile is shown in Figure 5C.

Analogously, the NPI-NLI grooves 205, 209, 213, 217, and 221 have tips positioned on an imaginary circle 252 on the top surface 201 and which expand to a periphery of the substrate 102. Moreover, each of the NPI-NLI grooves 205, 209, 213, 217 and 225 has a cross-section with a 3-D, non-linear path mathematically defined as a high order polynomial or alternatively an involute shape. The cross-section profile of each of the NPI-NLI grooves 205, 209, 213, 217, and 221 is shown in more detail in Figure 5B, while the non-linear, 3D path of each of the NPI-NLI grooves 207, 211, 215, 219, and 223 is shown in more detail in Figure 6B. It is to be understood that the representative profiles and paths of Figures 5A, 5B, 6A and 6B are for illustration purposes only and that the specific equations in Figures 5A, 5B, 6A and 6B do not limit the scope of the claims.

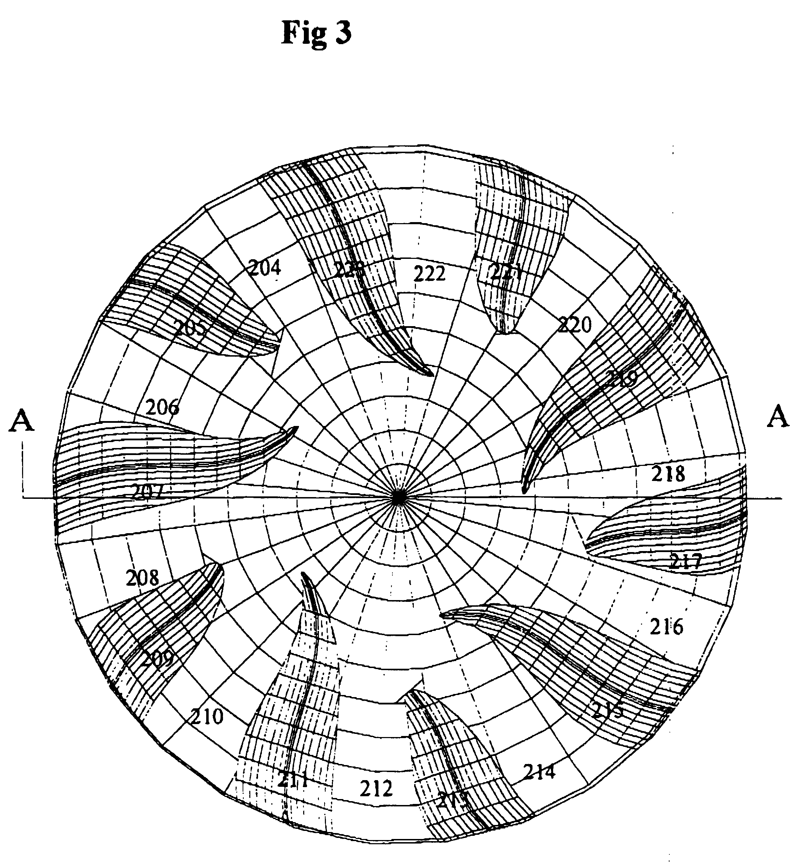

A top view of the surface 201 and blades mounted thereon is shown in Figure 3. As shown, the NPI-NLI grooves 205, 207, 209, 211, 213, 215, 217, 219, 221 and 223 form blades 204, 206, 208, 210, 212, 214, 216, 218, 220 and 222, respectively. Moreover, the second set of grooves 207, 211, 215, 219 and 221 extends more toward the center of the substrate 102 than the first set of grooves 205, 209, 213, 217, 221. The blades in one group are interleaved with the blades in the other group so that the combined blade sequence becomes 205, 207, 209, 211, 213, 215, 217 and 219, 221 and 223. The depth, size and path of adjacent grooves are different, but the depth, size and path of alternate grooves are the same. In this manner, more space for bonding is achieved, without unnecessarily overcrowding and reducing the integrity of the surface of the substrate 201.

Focusing in on the exemplary blade 214, from its tip, the blade 214 unfurls toward the perimeter of the substrate 102. Generally, the tip, side and base of the blade 215 has smooth shapes defined by grooves 215 and 213 to avoid sharp transitions which may increase the stress within the cutting element during operation.

A width W of the blade 214, as measured between sides of the generally increases as the blade 214 unfurls toward the perimeter of the substrate 102. Additionally, a depth D of the blade 214 also increases as the blade 214 unfurls. Hence, the blade width and depth generally increase from the center of the substrate 102 to provide more surface area to receive the superhard material when they are bonded to the tungsten carbide substrate 102. A pitch angle is also varied as a function of a radius, a curvature, and a cord of the blade 214 across the substrate 102, thus imparting a turbine blade like appearance to the surface of the substrate 102.

The process for creating a groove profile is an iterative process. Generally, a set of points are specified to dimensionally define a profile of the groove. A curve is drawn for example using a "trend line" function in an Excel spreadsheet that closely fits the curve to the points defined. Usually a high order polynomial equation is used for the curve. The co-efficients of the equation are adjusted to get a best fit to defined points, and to satisfy certain end-point conditions. The final equation is used to generate a 2-D non-linear profile of the groove.

The non-linear path of the groove is formed in a similar manner. A set of x-y and x-z points are specified to describe the non-linear path, and curves are generated to fit the points. The equations for the curves are adjusted to obtain the best fit to the points, as well as to satisfy certain end-point conditions. The final equations in x, y and z coordinates are used to generate a non-planar, non-linear path of the groove.

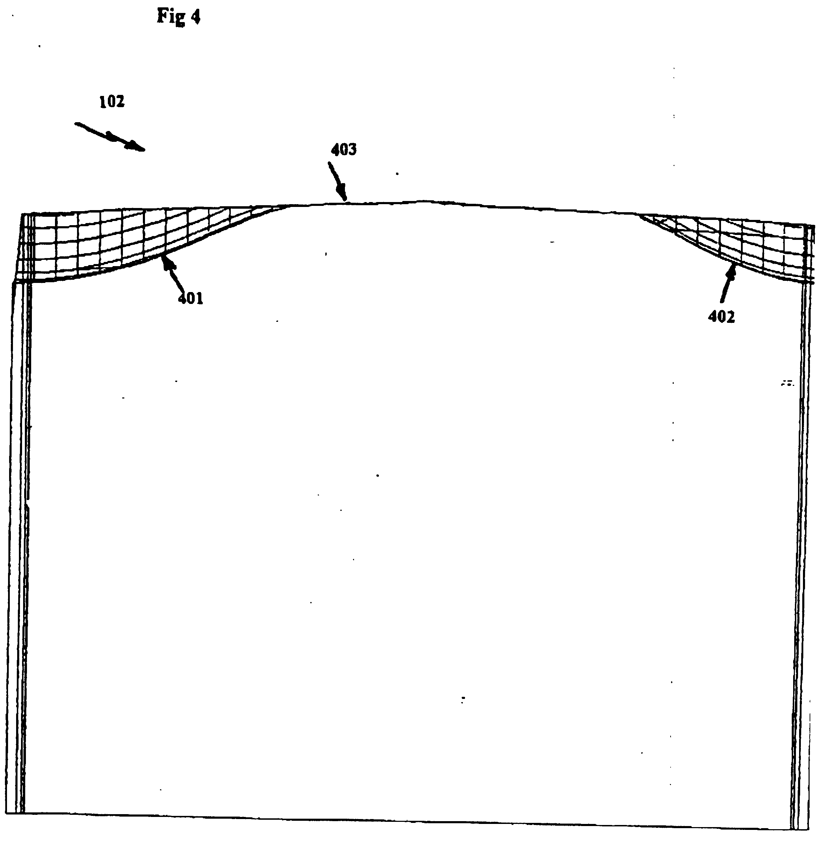

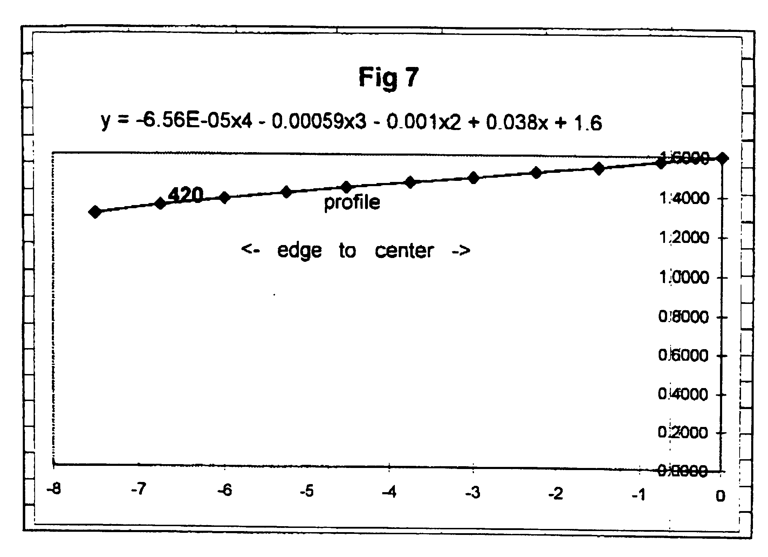

Fig. 4 shows a side, cross-sectional view of the substrate 102, as cut along lines A-A (Fig. 3). The substrate 102 has a top 403 that formed a non-linear profile shown in Figure 7 and non-linear paths 401 and 402 which unfurl from the top 403 toward the perimeter of the substrate 102.

The radial, sloped blade paths 401 and 402 of Fig. 4 support greater diamond thickness in both the radial and circumferential directions of the cutting element. This geometry provides improved wear life by virtue of greater diamond thickness on the perimeter of the cutter and greater impact strength by virtue of increased bonded surface area between the diamond substrate layers and s scattering of Herzian energy imparted during severe cutting conditions.

During manufacturing, a liquid phase sintering process is performed on the substrate 102 and the superhard portion 101 (Figures 1A and 1B) at a high temperature and a high pressure. The high pressure is required to maintain the polycrystalline diamond under stable thermodynamic conditions during the liquid phase sintering. Further, a layer of metallic additive may be provided at the interface 103 between the substrate 102 and the superhard layer 101 to enhance the bonding process.

Turning now to Figures 5A, 5B, 5C, 6A and 6B, exemplary illustrations of iterative processes to arrive at equations describing the profile and the path of a groove in the first set of grooves are shown. In Figure 5A, a set of points that dimensionally define one half of the profile of the groove is plotted as an input curve. A fitted curve is drawn using the trend line function that closely fits the points defined. A fourth order polynomial equation is used for the curve in this example. The co-efficients of the equation are adjusted to get the best fit to the defined points, and to satisfy certain end conditions. The final equation is used to generate a 2-D non-linear profile of the grooves. The resulting equation which form one-half of the cross section is mirrored to generate a composite equation describing one full cross section of the groove which is plotted as a curve 400. For Figure 5A, the groove profile equation is:

$$y = 0.034x^4 + 0.9553x^3 + 2.4448x^2 + 0.3001x + 0.0124$$

A similar process is used to generate a profile for one of the grooves in the other set. The profile is shown as a curve 402. For Figure 5B, the groove profile equation is:

$$y = 0.2003x^4 + 0.2968x^3 + 1.6602x^2 + 0.1847x + 0.0124$$

Figure 5C illustrates an involute profile for the groove. The involute profile is also arrived at using the iterative process to generate the curve of Figure 5A. For Figure 5C, the groove profile equations for one-half of the profile is:

$$y = 4126.8x^4 + 1335.3x^3 - 163.4x^2 + 9.038x$$

where $0 \leq x \leq 0.0888$
$x = (\tan\theta\sin\theta + \cos\theta)rbase \pm \cos(inv\theta) - 6.98$
$y = (\tan\theta\sin\theta + \cos\theta)rbase \pm \cos(inv\theta) + 0.2$
$rbase = 7.000$ ($\theta = 8$ to 43 deg. ($\pi/180$ radians)
$inv\theta \tan\theta - \theta$

Similarly, groove paths for grooves in the first and second sets are arrived at as curves 410, 412, 414 and 416 in Figures 6A and 6B. For Figure 6A, the groove profile equations are:

$$y = 0.0022x^4 + 0.0762x^3 - 0.8157x^2 + 3.5565x - 6.1992$$

$$z = 0.0031x^4 + 0.0769x^3 - 0.6298x^2 + 1.6938x + 0.0895$$

For Figure 6B, the groove profile equation is:

$$y = 0.0035x^4 + 0.0264x^3 - 0.2493x^2 + 2.8629x - 7.7672$$

$$z = 0.000566x^5 - 0.02355x^4 + 0.3696x^3 - 2.6808x^2 + 8.5739x - 8.1343$$

Additionally, a contour of the top surface of the substrate 102 is arrived at using a similar process, as shown in a curve 420 of Figure 7. For Figure 7, the groove profile equation is:

$$y = -6.56e^{-5}x^4 - 0.00059x^3 - 0.001x^2 + 02038x + 1.6$$

It is to be noted that these equations are for illustrative purposes only, and the claims are not to be limited to these exemplary equations describing the non-planar, non-linear profile and path of the grooves.

In the process of "capping" or cutting the top profile of the substrate 102, the initial cap is specified in x and y coordinates which define a curvature or profile of the top of the substrate 102. A curve is then drawn using the trend line function that closely fits the points defined. A fourth order polynomial equation is used for the curve. The co-efficients of the equation are adjusted to get the best fit to the defined points, and to satisfy certain end conditions. The final equation is used to generate a profile of the cap.

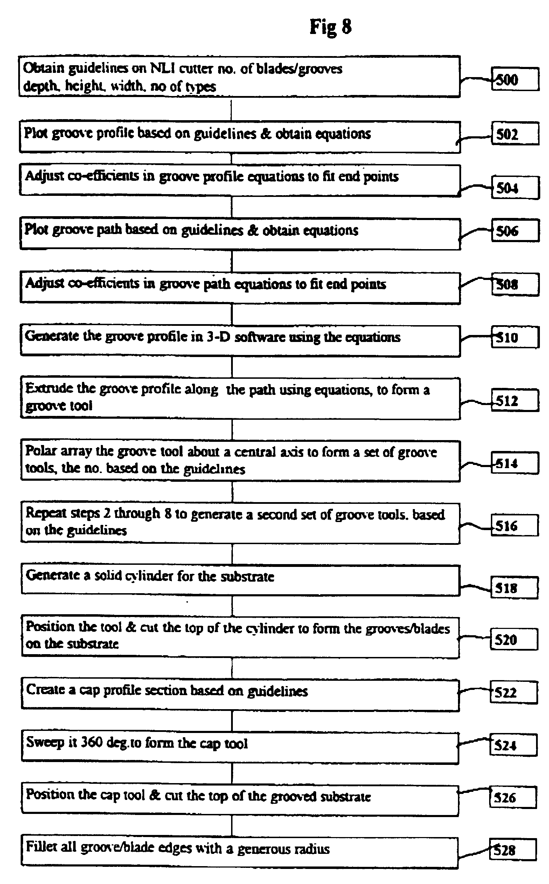

The process for creating the substrate structure is shown in Figure 8. First, guidelines the on cutting element is ascertained, including the number of blades, number of grooves, the types of grooves or blades, and dimensions on depth, height, width, among others (step 500). Next, groove profiles are generated, based on the guidelines of step 500 and equations describing the profiles are generated (step 502). The equations may be high order polynomial equations. The co-efficients in groove profile equations are then adjusted to fit end points (step 504). The groove paths are plotted based on the guidelines, and equations describing the paths are generated (step 506). In this step, x-y and x-z paths for each groove is graphed and trend lines of high order polynomials are generated. The y and z points are recalculated in x increments and adjusted to match end conditions. These co-efficients in groove path equations are updated to fit end points (step 508). The groove profile in 3-D are generated using the equations (step 510). Next, the groove profiles are extruded along the path using the generated equations to form a groove tool (step 512). The groove tool is placed in a polar array about a central axis to form a set of groove tools, the number of tools being based on the guidelines (step 514).

Steps 502-514 are repeated to generate a second set of groove tools from the guidelines (step 516). A solid cylinder is generated for the substrate (step 518). Next, the tool is' positioned and the top of the cylinder is cut to form the grooves and blades on the substrate (step 520). A cap profile section is then created, based on the guidelines (step 522), and swept 360 degrees to form a cap tool (step 524). The cap tool is positioned to cut the top of the grooved substrate (step 526). Finally, fillets are placed all groove/blade edges with a large radius (step 528).

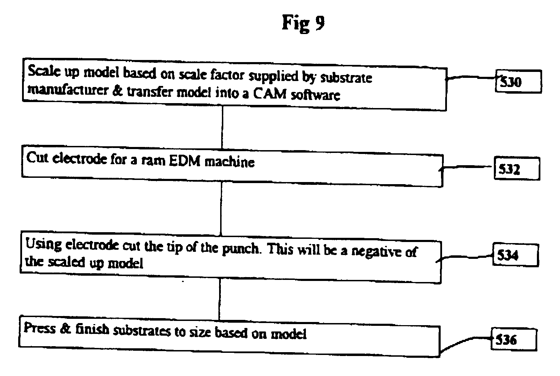

Turning now to Figure 9, a process for manufacturing the substrate is shown. First, a model of the substrate as created using the process of Figure 8 is used to scale up the model by a scale factor supplied by a substrate manufacturer. The model is transferred into a computer aided manufacturing software (step 530).

Next, electrodes for a ram electro-discharge machine (EDM) machine is cut (step 532). Using the electrodes, a tip of a punch is cut to form a negative of the scaled up model (step 534). The substrates are then pressed using the punch and finished to size based on a model (step 536). As the geometry of the cutter is directly downloaded to the EDM machine, highly complex & irregular shapes may be used for the cutter substrates. The solid models of the cutter may be used for finite element analysis work as well.

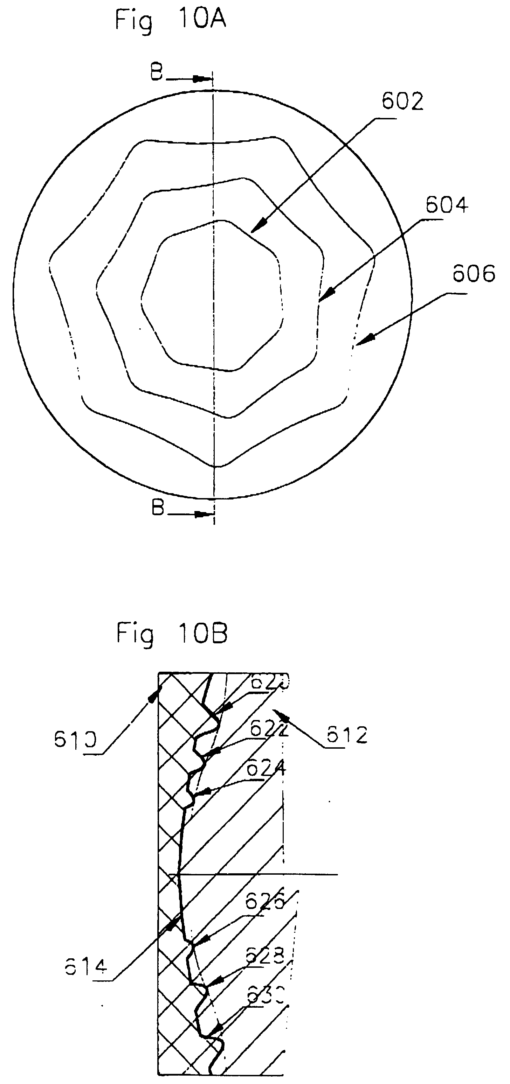

Turning now to Figures 10A and 10B, views of a second cutting element 600 are shown. Figure 10A shows a front view of the second cutting element 600 with one or more inner grooves 602, 604 and 606. Each of inner grooves 602, 604 and 606 has a polygonal groove path with seven angles and seven sides, although any other suitable number of angles and sides may be used. Large fillets are provided to render the top surface of a substrate 612 (Figure 10B) a continuous, non-linear, undulating surface that is symmetric about the center of the cutting element 600. Moreover, each of inner grooves 602, 604 and 606 are radially shifted with respect to each other so that a cross section of the cutting element 600 is asymmetrical.

Figure 10B is a cross sectional view of the cutting element 600, as cut along line B-B. The cutting element 600 has a superhard layer 610, a substantially curved substrate 612 with a substantially curved interface 614. The curved substrate 612 has a plurality of angled groove projections 620-630. The groove projections 620-630 are parts of the inner grooves 602-606, respectively. Due to the radially rotated inner grooves 602-606, the cutting element 600 has an asymmetrical cross-section.

Although the non-planar, non-linear substrate has been shown with specific numbers of grooves that form blades, any number of blades or grooves with similar or dissimilar profiles, depths, heights, pitch, paths and fillets may be used, including those of U.S. Patent Application No. 08/921,778, entitled "ABRASIVE CUTTING ELEMENT WITH INCREASED PERFORMANCE," filed on 2.9.97 by John T. Devlin, hereby incorporated by reference. The blades may be centrally positioned or may be non-symmetrical or offset from the center of the substrate. More over, other non-linear patterns may be used to form such grooves, ridges, blades, or highly irregular shapes, an open flower, a happy face, or veins on a leaf.

It is to be understood that the above-described arrangements are only illustrative of an application of the present invention. Any modifications and alternative arrangements may be devised by those skilled in the art without departing from the spirit and scope of the present invention and the appended claims are intended to cover such modifications and arrangement.

# APPENDIX 1

## U.S patent application no. 08/921,778, filed 2 September 1998, entitled "Abrasive Cutting Element with increased performance"

## Background of the Invention

The present invention relates to cutting elements with non-planar interfaces, and more specifically, to cutting elements with non-planar, non-linear interfaces.

Industrial applications such as subterranean drilling, cutting, machining, milling, grinding, and other highly abrasive operations require tools with a high resistance to abrasion, wear and percussion. In these instances, abrasive compacts or cutting elements designed specifically to withstand the highly abrasive operations are deployed.

Typically, these cutting elements are made up of facing tables with superhard abrasive layers mounted on substrates made from a less hard material. The substrate or mounting layer is typically made of a metal carbide material such as tungsten carbide, while the superhard abrasive layer is typically made of fine crystals of synthetic or natural diamond, cubic boron nitrite (CBN), wurzite boron nitrite, or combinations thereof. The cutting element is mounted on a carrier which is typically a cylindrical stud or post. One surface of the substrate is brazed to the carrier surface and the resulting stud is positioned in a socket in the body of the drill bit. Alternatively, the substrate itself may be of sufficient thickness as to substitute for the cylindrical stud to be directly received in a socket of the bit body.

The abrasive layer of the cutting element is typically created by a process known as sintered bonding or sintering where polycrystalline diamond (PCD) crystals are subjected to a combination of high pressure and high temperature processes, or alternatively, to chemical vapor or physical vapor deposition processes, such that an intra-crystalline bonding occurs. More details on the sintering process is disclosed in U.S. Patent

APPENDIX 1

Application No. 08/703,864, entitled "Curve Cutter with Non-Planar Interface", issued on ___, 1997 to John T. Devlin and assigned to the assignee of the present invention, herein incorporated by reference.

The bonding of the substrate to the polycrystalline material occurs under a temperature in excess of 1,300°C. Subsequently, as the cutting element cools down, the substrate may shrink faster than the polycrystalline material layer due to differences in coefficients of thermal expansion. The differential shrinkage leads to residual shear stresses between the substrate and the PCD layer. As such, thermally-induced stress points may exist between the substrate and the table. In addition, local tensile stresses may be introduced into various regions in the outer cylindrical surface of the substrate and internally in the substrate. These stress points generally reduce the sintered bond strength of the polycrystalline material.

Further, during use, failures are often brought about by impact forces that release stress in the form of fractures in the compact. These fractures lead to a separation or a delamination of the polycrystalline material from the substrate material, as well as a fracture of the substrate during operation. Hence, the presence of stress points introduced during the formation and mounting of the cutting element, when augmented by stresses attributable to the loading of the cutting element during operation, may cause spallings, fractures, or delaminations of the diamond table from the substrate. These failure modes are likely to lead a complete failure of the PCD element.

Additionally, as the cutting element wears during use, a flat surface forms on an edge of the cutting element. As the flat formation increases in size due to wear, the carbide section of the cutting element receives greater stress and therefore wears at an accelerated pace. The wearing of the carbide support can decrease the cutting efficiency of the assembly and eventually results in a premature equipment failure. To overcome this problem, a thicker diamond layer has been specified to

APPENDIX 1

improve the operating life of the cutting element. However, as the thickness of the diamond table depends in part on the availability of bonding surface on the substrate, such attempts generally lower production yields and result in more expensive cutting elements.

A number of cutting element configurations have been developed to overcome the aforementioned problems. To improve the bond between the superhard material and the substrate, certain cutting elements have modified the shape of the superhard material's rear face from a flat configuration to a non-planar configuration to provide a better mechanical interlock between the superhard material and the substrate. Other attempts have focused on applying a non-planar interface (NPI) geometry such as ridges to increase the interfacial area between the superhard material and the substrate, as well as creating an interlocking mechanism between the materials. The ridges improve the bonding between the table and the substrate by accommodating distortions generated during the sintering process as well as the subsequent bonding of the cutting element onto a carrier. The distortions are generally caused by differences in coefficients of thermal expansion and elastic moduli between the superhard material of the facing table and the less hard material of the substrate.

Yet other NPI cutting elements employ one or more constant cross-sectional grooves or channels on the abrasive layer that communicate with corresponding channels or grooves on the substrate. However, the use of parallel grooves at the interface as a mechanical interlock is not ideal, for parallel ridges or similar perturbations may be less resistant to shear stresses in the direction of the grooves. This in turn requires that the cutter be properly oriented in the drill bit in order to realize the improved mechanical interlocking feature.

Other NPI cutting elements provide sinusoidal-like grooves that run perpendicular to the longitudinal axis of the cutting element. Additionally, some NPI cutting elements, as in U.S. Patent No. 5,357,772, provide grooves that run radially to or in

a circular fashion along the longitudinal axis of the cutting element. Yet other NPI cutting elements, as in U.S. Patent No. 5,355,969, position concentric annular rings that expand outwardly from the center of the interface to increase available bonding surface area. In these elements, a wearing of the circular grooves and concentric annular rings causes a more rapid formation of wear flat on the cutting element and therefor reduces the cutting performance of the tool in formation drilling applications.

Certain other cutting elements use a curved or domed interface to increase the bonding area between the superhard material and the substrate. The domed interface increases the volume of the superhard material available for abrasive tasks. The domed surface for PCD formation is typically deployed with a transition layer between the substrate and the diamond layer, as discussed in U.S. Patent No. 4,604,106. This is an attempt to reduce the differences in a co-efficient of thermal expansion (CTE) and an elastic modulus between the two materials. However, the spalling and delamination of the cutting element still exist. Moreover, the transition layer approach results in an inefficient sweep of a binder material from the substrate to the diamond and therefore impedes manufacturability.

The failure in the cutting element due to the aforementioned problems may necessitate a retooling of the drill bit in the field. When costs associated with equipment down-time, labor and replacement are considered, such failures are undesirable, especially in the case of deep-well and off-shore drilling applications.

APPENDIX 1

## Summary of the Invention

A cutting element has a substrate with one or more non-planar, non-linear protrusions concentrically mounted on a surface and spaced apart. The cutting element also has a table made of a superhard material bonded to the substrate. The table has one or more depressions adapted to engage the one or more non-planar, non-linear protrusions.

In one aspect, each protrusion has a generally curved shape such as a delta or triangular shape that extends from the center of the substrate toward the perimeter of the substrate.

In another aspect, the depth of the groove between protrusions generally varies along the path toward the perimeter of the element. Similarly, the depth of each protrusion from groove to groove varies along the path toward the perimeter of the element.

In yet another aspect, a thick, superhard layer such as a diamond layer is provided toward the perimeter of the element to increase working life. The resulting substrate is symmetrical about the central axis to alleviate the need for proper orientation of the cutting element during assembly into a drill bit.

In a second embodiment, a depression is used in place of the protrusion to form a substrate. In the second embodiment, the width of the depression as well as the depth of walls between depressions generally varies along the path toward the perimeter of the element.

In yet another aspect, the substrate is bonded to the table using one or more metallic additives mixed with the PCD layer. The metallic additives may include W, VC, WC, TaC, Cr, Ti, Co, and Ni. These metallic additives serve to improve the manufacturability of these non-linear products by providing a more evenly distributed binder phase material, an inhibitor of graphitization of the tungsten carbide and/or a seed site for diamond nucleation and diamond growth.

Advantages of the invention include the following. The non-

APPENDIX I

linear profile of the substrate distributes residual stresses caused by inherent differences in material properties more evenly and over a larger surface. The non-linear interfacial surface reduces shear stress as applied to the interface during use. Additionally, the enhanced mechanical interlocking enhances the stability and the performance of the cutting element. The resulting high resistance to impacts during the drilling cycle translates into a longer bit life. Furthermore, the non-constant cross-sectional surface increases the interfacial area between the two materials, allowing for a thicker superhard layer to be provided to increase the operating life of the element. The symmetry of the cutting element about its center alleviates the need for a proper orientation of the cutting element during its assembly into a drill bit. Additionally, stress between the substrate and the polycrystalline is minimized, thus reducing fractures or delaminations of the superhard material from the substrate during manufacturing, mount or operation of the element.

## Brief Description of the Drawings

The invention will become apparent from a consideration of the following detailed description presented in connection with the accompanying drawings, in which:

Figure 1 is a perspective view illustrating a PCD substrate with concentric, spaced protrusions;

Figure 2 is a front view of the substrate of Figure 1;

Figure 3 is a front view illustrating an expanded portion of the substrate of Figure 2;

Figure 4 is a perspective view illustrating a second embodiment of a PCD substrate with concentric, spaced depressions.

Figure 5 is a side, cross-sectional view of the substrate of Figure 4 along lines A-A;

Figure 6 is a side, cross-sectional view of an enlarged portion of the substrate of Figure 5;

APPENDIX 1

Figure 7 is a front view of the substrate of Figure 4;

Figure 8 is a front view illustrating an expanded view of a portion of the substrate of Figure 7;

Figure 9 is a side, cross-sectional view of a third embodiment of a substrate; and

Figure 10 is an enlarged side, cross-sectional view of a portion of the substrate of Figure 9.

## Description of the Preferred Embodiments

DEFINITION:

The following definitions apply to specific terms used in describing cutting elements discussed below:

Non-linear: a characteristic of a structure with a continuous surface and whose cross section does not lie in any one plane.

Non-planar: a characteristic of a structure whose surface does not lie in a single plane.

THE CUTTING ELEMENT

Turning now to the drawings, Figure 1 illustrates a substrate 100 of a composite PCD cutting element. The substrate 100 has a generally cylindrical base 101. The base 101 supports a generally curved surface 104. In the embodiment of Figure 1, the curved surface 104 is convex, although other shapes such as concave, pyramidal, hemispherical, circular may be used. An outside perimeter groove 102 is formed at an interface between the base 101 and the curved surface 104. Mounted on the curved surface 104 are a plurality of non-linear protrusions 110, 112, 114, 116, 118 and 120. These non-linear protrusions are symmetrical in relation to a central axis 122 of the substrate. Each of the protrusions 110-120 is of a delta or triangular shape, although other curved shapes may be used. As protrusions 110-120 are mounted on the curved surface 104 which slopes downwardly at the perimeter of the substrate 100, the protrusions 110-120 provide increased surfaces toward the perimeter which

APPENDIX 1

allows a thicker superhard layer such as the PCD layer to be provided toward the circumference of the element to increase working life.

In the embodiment of Figure 1, each of the generally delta or triangular shaped protrusions 110-120 has an apex 124 positioned on an inner circle 123 whose center is the central axis 122. For illustrative purpose, the following discussion of the protrusion 120 applies to all protrusions 110-120. From the apex 124, the protrusion 120 projects outwardly from the inner circle 123 toward an outer circle 125 in a generally curved fashion and in spaced relationship with the remaining protrusions.

As the curved surface 104 is curved, a width W, as measured between sides of the protrusion 120, increases as the protrusion 120 unfurls from the apex 124 toward the outer perimeter 125. Additionally, the depth D of the protrusion 120 also increases as the protrusion 120 unfurls from the apex 124 toward the outer perimeter 125. As the curved surface 104 is convex, the protrusion depth generally increases from the central axis 122 toward the perimeter 125. As the protrusion 120 resides on a generally convex surface 104, even though the depth D is generally increased from the apex 124 toward the perimeter 125, the overall curvature of the assembly is still downwardly sloped so that a thicker superhard layer or diamond layer exists toward the circle of the entire element to increase the working life. Thus, variations in the depth D of the protrusion 120 thus provides more space to receive the superhard material when they are bonded to the tungsten carbide.

Referring now to Figure 2, a front view of the substrate 100 of Figure 1 is shown. In Figure 2, the outside perimeter groove 102 resides at a perimeter of the substrate 100. Additionally, the plurality of delta protrusions 110-120 are mounted concentrically on the surface of the substrate 100. Each of the protrusions 110-120 has a non-linear shape that generally resembles a triangle or delta whose apex is positioned on the

15

*APPENDIX 1*

inner circle 123 having a radius R1 and the outer circle 125 whose radius is R2. Additionally, each of protrusions 110-120 is separated by an inlet 108. The inlet 108 separating protrusions 110 and 120 is wider at the apex 124 than at the base 127 of the protrusion 120.

To illustrate more details on the protrusions 110-120, a portion 130 of the substrate 100 is shown in more detail in Figure 3. The portion 130 of the substrate 100 of Figure 2 covers the protrusion 116. The protrusion 116 takes the shape of a generally non-linear delta or triangle having an apex 132 which is positioned on the inner circle 127 of the circle with radius R1 (Figure 2) and base points 134 and 136 of the base 127. Points 134 and 136 are positioned on the outer circle 125 with radius R2 (Figure 2). Furthermore, each of points 132, 134 and 136 is formed as smooth, curvilinear transitions to avoid sharp edges which may increase the stress within the substrate 100 during operation. Additionally, edges 140, 142 and 146 linking the apex 132 and base points 134 and 136 respectively are also curvilinear. The segment 140 has a curvature of about 46°, the segment 140 has a curvature of about 41°, and the segment 146 has a curvature of about is about 68°. The non-constant cross-sectional surface increases the interfacial area between the two materials. Furthermore, due to the placement of the protrusion 116 relative to its neighbors 114 and 118, the groove 108 channeling between protrusions 114 and 116 generally becomes narrower as the channel 108 approaches the outer perimeter 125 of the cutter 100.

Turning now to a second embodiment, Figure 4 illustrates a substrate 200. The substrate 200 has a generally flat base 201, upon which is mounted a generally curved, parabolic shaped surface 104. An outside perimeter groove 202 exists at the interface between the base 201 and the parabolic surface 204. Mounted on the curved surface 204 are a plurality of generally non-linear delta shaped depressions 210, 212, 214, 216, 218 and 220 which are adapted to contain the superhard material. These

non-linear delta-shaped depressions are symmetrical in relation to each other and are concentrically placed around a central axis 222 of the substrate surface 204. Each of the non-linear delta depressions 210-220 has an apex 224 which is positioned on an inner circle 223 whose center is the central axis 222. Further, from the apex 224, the groove 220 projects outwardly from the inner circle 223 toward an outer circle 225.

Figure 5 shows a side, cross-sectional view of the substrate 200 (Figure 4). The substrate 200 is shown with the flat base 201 supporting the generally convex surface 204. Grooves 202 and 156 are positioned at the interface between the convex surface 204 and the flat base 201. Further, a plurality of cuts 148, 150, 152 and 154 are recessed within the convex surface 104 and are symmetrical to the central axis. A table 203 engages the substrate 200 at cuts 148, 150, 152 and 154. The substrate 200 thus provides an increased diamond cutting surface at its perimeter to provide more superhard materials. The presence of additional superhard materials at the perimeter of the cutting element leads to a longer wear life and an increased resistance to percussions during operation. The base 201 is about 0.1 inch in height and has a radius of about 1 inch. Further the top of the convex surface 204 projects about 0.15 inches above the base 201.

Referring now to Figure 6, details of the recess 150 are shown. The recess 150 has generally angled sidewalls 162 and 168. The recess 150 also has a base section 164. At junction points 160, 163, 166 and 170, smooth edges are provided to minimize stress points which may result. Each of the sidewall 162 is about 0.04 inches and are curved with a 12° arc. Further, each of the junction points 160-170 has a radius of about 0.007 inches.

Referring now to Figure 7, a front view of the substrate 200 of Figure 6 is shown. In Figure 7, the groove 202 exists at the rim of the substrate 200. Additionally, the plurality of generally curved delta depressions 210-220 are positioned

APPENDIX 1

concentrically on the surface 204 of the substrate 200. Further, each of depressions 210-220 has a non-linear shape that generally resembles a delta or a triangle whose apex is positioned on the inner circle 223 having a radius R1 and the outer circle 225 whose radius is R2. Additionally, each pair of adjacent grooves 210-220 is separated by an inlet 208.

An enlarged portion 230 of the substrate 200 is shown in more detail in Figure 8. As shown therein, the groove 216 takes the shape of a generally smoothed delta or triangle having an apex 232 which is positioned on the inner circle 223 with a radius R1 (Figure 7) and base points 234 and 236. Points 234 and 236 are positioned on the outer circle 225 with a radius R2 (Figure 7). Each of points 232, 234 and 236 is curved to avoid abrupt transitions which may increase the stress within the substrate 200. Additionally, edges 240, 242 and 246 connecting the apex 232 and base points 234 and 236 are also curved or smoothed to avoid abrupt changes. A curved wall 208 between depressions 214 and 216 becomes narrower as the wall 208 approaches the outer circle 225 of the cutter 200.

Turning now to Figure 9, a side cross sectional view of a third embodiment of the substrate is shown. The substrate 300 has the base 301 with a generally planar surface 304. Grooves 302 and 356 are positioned at the interface between the generally planar surface 304 and the generally flat base 301. On the generally flat surface 304, a plurality of ridges 304, 306 and corresponding recesses 314, 328, and 322 exist which are concentric to the focal point 322.

Referring now to Figure 10, details of the recess 350 are shown. In Figure 10, the recess 350 has sidewalls 362 and 368. The recess 350 also has a base section 364. At junction points 360, 363, 366 and 370, smooth edges are provided to minimize fractures, as caused by stress during manufacturing or during use.

During manufacturing, a predetermined amount of diamond crystals and a tungsten carbide substrate are placed within an

18

APPENDIX 1

enclosure. The enclosure is typically made from molybdenum, tantalum or niobium, although nearly any refractory metal may be used. The enclosure is then subject to a high pressure, high temperature cycle of at least 50 kilobars and 1200°C for 2-120 minutes. A binding material in a substrate consolidates and binds the diamond crystals into a single sintered polycrystalline mass. Additionally, various metallic additives maybe mixed with the diamond crystal to provide for the correct stochiometry of the sintered system. These materials may include, but are not limited to W, VC, WC, TaC, Cr, Ti, Co, and Ni. These additives provide two improvements: 1) they tend to decrease the carbon rich stochiometry of the sintered system and 2) they provide an evenly dispersed seed site for diamond grain growth nucleation.

Although the non-planar, non-linear substrate has been shown with specific numbers of protrusions or depressions, any number of protrusions or depressions with similar or dissimilar profiles, depths, heights, pitch, paths and fillets may be used, including those of U.S. Patent Application No. _____, entitled "CUTTING ELEMENT WITH A NON-PLANAR, NON-LINEAR INTERFACE," filed on _____ by John B. Yorstin and Deepthi R. Setlur, hereby incorporated by reference. The protrusions or depressions may be centrally positioned or may be non-symmetrical or offset from the center of the substrate.

It is to be understood that the above-described arrangements are only illustrative of an application of the present invention. Any modifications and alternative arrangements may be devised by those skilled in the art without departing from the spirit and scope of the present invention and the appended claims are intended to cover such modifications and arrangement.

What is claimed is:

APPENDIX 1

1.  A cutting element, comprising:

a substrate having a surface and one or more non-planar, non-linear protrusions concentrically mounted on the surface and spaced apart; and

a table having a superhard material bonded to the substrate, the table having one or more depressions adapted to engage the one or more non-planar, non-linear protrusions.

2.  The cutting element of claim 1, further comprising a channel running between adjacent protrusions.

3.  The cutting element of claim 2, wherein each protrusion has an apex positioned near a center of the element and a base positioned toward a perimeter of the element, and wherein the channel is wider at the apex than at the base of the protrusion.

4.  The cutting element of claim 1, wherein each protrusion has an apex positioned near a center of the element and a base positioned toward a perimeter of the element, and wherein each protrusion has varying depths and the depth of the protrusion at the apex is different than the depth at the base.

5.  The cutting element of claim 1, wherein each protrusion has an apex positioned near a center of the element and a base positioned toward a perimeter of the element, and wherein each protrusion has varying widths and the width of the protrusion at the apex is different than the depth at the base.

6.  The cutting element of claim 1, wherein each protrusion has non-linear edges.

7.  The cutting element of claim 1, wherein the protrusion is delta-shaped.

8.  The cutting element of claim 1, further comprising a

APPENDIX I

channel running between adjacent protrusions, wherein each protrusion has an apex positioned near a center of the element and a base positioned toward a perimeter of the element, and wherein the channel is narrower at the apex than at the base of the protrusion.

9. The cutting element of claim 1, wherein the non-linear surface is convex.

10. The cutting element of claim 1, further comprising a base mounted to the cutting element.

11. A cutting element, comprising:
a substrate having a surface and one or more non-planar, non-linear depressions concentrically mounted on the surface and spaced apart; and
a table having a superhard material bonded to the substrate, the table having one or more protrusions adapted to couple to the one or more non-planar, non-linear depressions.

12. The cutting element of claim 11, further comprising a wall running between adjacent depressions.

13. The cutting element of claim 12, wherein each depression has an apex positioned near a center of the element and a base positioned toward a perimeter of the element, and wherein the wall is wider at the apex than at the base of the depressions.

14. The cutting element of claim 11, wherein each depression has an apex positioned near a center of the element and a base positioned toward a perimeter of the element, and wherein the depression has varying depths and the depth of the depression at the apex is less than the depth at the base.

15. The cutting element of claim 11, wherein each depression has an apex positioned near a center of the element and a base positioned toward a perimeter of the element, and wherein the depression has varying widths and the width of the depression at the apex is less than the depth at the base.

16. The cutting element of claim 11, wherein each depression has non-linear sides.

17. The cutting element of claim 11, wherein the depression is delta-shaped.

18. The cutting element of claim 11, further comprising a wall running between adjacent depressions, wherein each depression has an apex positioned near a center of the element and a base positioned toward a perimeter of the element, and wherein the wall is narrower at the apex than at the base of the depression.

19. The cutting element of claim 11, further comprising:
a tungsten carbide layer;
a polycrystalline diamond (PCD) layer mounted on the tungsten carbide layer; and
one or more metallic additives mixed with the PCD layer.

20. The cutting element of claim 19, wherein the metallic additives include W, VC, WC, TaC, Cr, Ti, Co, and Ni.

APPENDIX 1

# ABRASIVE CUTTING ELEMENT WITH INCREASED
## PERFORMANCE
### Abstract of the Disclosure

A polycrystalline diamond cutting element has a non-planar, non-linear interface between a substrate and a table. The substrate has one or more protrusions mounted on the surface of the substrate and in spaced relationship. Each protrusion has a generally curved shape such as a delta or triangular shape that extends from the center of the substrate toward the perimeter of the substrate. The depth of the groove between protrusions generally increases along the path toward the perimeter of the element. Similarly, the depth of each protrusion from groove to groove varies along the path toward the perimeter of the element. A thicker, superhard layer such as a diamond layer is provided toward the circle of the element to increase working life. The resulting cutting element is symmetrical about the central axis to alleviate the need for proper orientation of the cutting element during assembly into a drill bit. In another embodiment, a depression is used in place of the protrusion to form a substrate. In the second embodiment, the width of the depression as well as the depth of walls between depressions generally increases along the path toward the perimeter of the element.

APPENDIX 1

FIG. 1

APPENDIX 1

FIG. 2

FIG. 3

FIG. 5

FIG. 6

APPENDIX 1

FIG. 4

FIG. 7

FIG. 8

FIG. 9

FIG. IO

Claims

1.  A cutting element, comprising:

    a generally planar base having a non-linear surface on the base;
    a first set of non planar, non-linear grooves formed on the surface, each of the non-planar, non linear grooves having a non-linear wall, where a cross-section of the base through the surface is asymmetrical.

2. The cutting element of the claim 1, further comprising a second set of grooves formed on the surface, wherein each of the first and second grooves are alternatively positioned on the non-linear surface.

3. The cutting element of either of claims 1 or 2, wherein the shape of the non-linear wall is specified by a complex function.

4. The cutting element of any preceding claim, wherein each of the non-linear groove has a varying depth and wherein the depth varies with radius.

5. The cutting element of any preceding claim, wherein each of the non-linear grooves has a shape defined by an involute.

6. The cutting element of any preceding claim, wherein each of the non-linear grooves is sloped.

7. The cutting element of any preceding claim, further comprising a substantially flat cap coupled to the grooves.

8. The cutting element of any preceding claim, wherein each non-linear groove has a shape defined by polynomial expressions having an order of at least two.

9. The cutting element of any preceding claim, wherein each non-linear groove has varying widths, depths and pitches.

10. The cutting element of any preceding claim, wherein the widths and depths of each groove vary toward a perimeter of the non-linear surface.

11. A cutter, comprising:

a substrate, including:
a generally planar base having a non-linear surface on the base;
a first set of non-planar, non-linear grooves formed on the surface, each of the non-planar, non-linear grooves having a non-linear wall, where a cross-section of the base through the surface is asymmetrical; and
a table having a bottom with one or more blades being arranged to interlock with each of the grooves.

12. The cutter of claim 11, further comprising a second set of grooves formed on the non-linear surface, wherein each of the first and second grooves is alternatively positioned on the surface.

13. The cutter of either of claims 11 or 12, wherein each of the non-linear grooves has varying depths.

14. The cutter of any claims 11 to 13, wherein each of the grooves has a shaped defined by an involute or a polynomial expression having an order of at least two.

15. The cutter of any of claims 11 to 14, further comprising a metallic additive layer positioned between a mounting layer and an abrasive layer.

16. The cutter of any of claims 11 to 15, wherein the substrate and the table are sintered bonded together.

17. A method for forming a cutting element having one or more non-planar, non-linear grooves on a surface of the cutting element, the method comprising the steps of:

specifying an initial profile of the groove;
generating a polynomial expression having an order of at least two representative of the initial profile; and
adjusting one or more co-efficients of the expression to satisfy predetermined end conditions.

18. The method of claim 17, further comprising generating a non-linear path for the groove.

19. The method of either of claims 17 or 18, further comprising generating a profile of the cap.

20. The method of any of claims 17 to 19, further comprising:

specifying an initial profile of the groove in a second plane;

generating a second polynomial expression having an order of at least two fitting the initial profile with respect to the second plane; and

adjusting the co-efficients of the expression to satisfy certain end conditions; and

generating a non-planar, non-linear profile of the groove from the second polynomial expression.

21. A cutting element or a cutter as claimed in any preceding claim, wherein at least one of the first set of non-planar, non-linear grooves or the second set of non-planar, non-linear grooves are either concentrically arranged or circumferentially disposed and inwardly directed.

## Fig 1A

# Fig 1B

Fig 2

# Fig 3

Fig 4

## Fig 5A

$y=-0.034*x^4+0.9553*x^3\mp2.4448*x^2+0.3001*x+0.0124$

400

## Fig 5B

$y=-0.2003*x^4+0.2968*x^3+1.6602*x^2+0.1847*x+0.0124$

402

35

Fig. 5C

## Fig 6A

$$z=-0.0031*x^4+0.0769*x^3-0.6298*x^2+1.6938*x+0.0895$$

**410**

$$y=-0.0022*x^4+0.0761*x^3-0.8157*x^2+3.5565*x-6.1992$$

**412**

## Fig 6B

**414**

$$z=0.000566*x^5-0.02355*x^4+0.3696*x^3-2.6807*x^2+8.5739*x-8.1343$$

$$y=0.0035*x^4-0.0264*x^3-0.2493*x^2+2.8629*x-7.7672$$

**416**

# Fig 7

$$y = -6.56E\text{-}05x4 - 0.00059x3 - 0.001x2 + 0.038x + 1.6$$

420

profile

<- edge to center ->

## Fig 8

| | |
|---|---|
| Obtain guidelines on NLI cutter no. of blades/grooves depth, height, width, no of types | 500 |
| Plot groove profile based on guidelines & obtain equations | 502 |
| Adjust co-efficients in groove profile equations to fit end points | 504 |
| Plot groove path based on guidelines & obtain equations | 506 |
| Adjust co-efficients in groove path equations to fit end points | 508 |
| Generate the groove profile in 3-D software using the equations | 510 |
| Extrude the groove profile along the path using equations, to form a groove tool | 512 |
| Polar array the groove tool about a central axis to form a set of groove tools, the no. based on the guidelines | 514 |
| Repeat steps 2 through 8 to generate a second set of groove tools, based on the guidelines | 516 |
| Generate a solid cylinder for the substrate | 518 |
| Position the tool & cut the top of the cylinder to form the grooves/blades on the substrate | 520 |
| Create a cap profile section based on guidelines | 522 |
| Sweep it 360 deg. to form the cap tool | 524 |
| Position the cap tool & cut the top of the grooved substrate | 526 |
| Fillet all groove/blade edges with a generous radius | 528 |

## Fig 9

Scale up model based on scale factor supplied by substrate manufacturer & transfer model into a CAM software — 530

Cut electrode for a ram EDM machine — 532

Using electrode cut the tip of the punch. This will be a negative of the scaled up model — 534

Press & finish substrates to size based on model — 536

## Fig 10A

## Fig 10B